# EUROPEAN PATENT APPLICATION

(11) **EP 1 746 587 A1**
(43) Date of publication of application: **24.01.2007**
(21) Application number: 05734455.8
(22) Date of filing: 19.04.2005
(51) Int. Cl.: G11B 7/085, G11B 7/09

(54) **OPTICAL DISC DEVICE AND OPTICAL DISC SEMICONDUCTOR**

(30) Priority: 23.04.2004 JP 2004127803
(71) Applicant: Matsushita Electric Industries Co., Ltd., Kadoma-shi, Osaka 571-8501 (JP)
(72) Inventor: FUJIUNE, Kenji, Matsushita Elec. Ind. Co., Ltd., Chuo-ku, Osaka-shi, Osaka 540-6319 (JP); OKADA, Yuu, Matsushita Electric Ind. Co., Ltd., Chuo-ku, Osaka-shi, Osaka 540-6319 (JP)
(74) Representative: Eisenführ, Speiser & Partner
(86) International application number: PCT/JP2005/007477
(87) International publication number: WO 2005/104108

(57) **Abstract**

An object of the present invention is to provide an optical disc apparatus which can adjust a gain and an offset in lens shift control with a high precision in a short period of time. The optical disc apparatus according to the present invention includes a semiconductor laser 11, a condensing lens 13, a tracking actuator 15, a main TE generator 20, a sub TE generator 21, an LE generator 40, a midpoint filter 42, a circuit offset detector 50, a stray light offset detector 51, an offset compensator 53, an apparatus instructor 56, and an offset instructor 54. The circuit offset detector 50, the stray light offset detector 51, and the offset compensator 53 compensate an offset of a signal from the LE generator 40. The apparatus instructor 56 outputs a signal indicating an apparatus state as a search operation, a recording operation, reproduction operation, or waiting. The offset instructor 54 gives instructions to perform circuit offset compensation at timing when the signal from the apparatus instructor 56 is switched to the search operation from any of the other states.

## Description

The present invention relates to an optical disc apparatus which allows stable search for a target track in recording or reproducing information to or from a recordable information carrier having a disc shape (hereinafter, referred to as an optical disc).

### BACKGROUND ART

In a conventional optical disc apparatus, for reproducing a signal, an optical disc which is an information carrier is irradiated with a constant amount of a relatively weak light beam, and the light reflected off the optical disc and modulated stronger or weaker is detected. For recording a signal, information is written on a recording material film on the optical disc with the intensity of the light beam being modulated stronger or weaker in accordance with a signal to be recorded (see, for example, Reference 1).

On an optical disc for reproduction only, information is previously recorded in a spiral pattern with pits. An optical disc for both recording and reproduction is produced by forming a film of a material, which can be optically recorded or reproduced, on a surface of the substrate having tracks of a convex-concave structure in a spiral pattern by means of evaporation or the like. For recording information on or reproducing information recorded on an optical disc, focus control and tracking control are required. Focus control is for controlling a light beam along a line normal to a surface of an optical disc (hereinafter, referred to as a focus direction) such that the light beam is always in a predetermined convergence state on the recording material film. Tracking control is for controlling a light beam in a radial direction of an optical disc (hereinafter, referred to as a tracking direction) such that the light beam is always on a predetermined track.

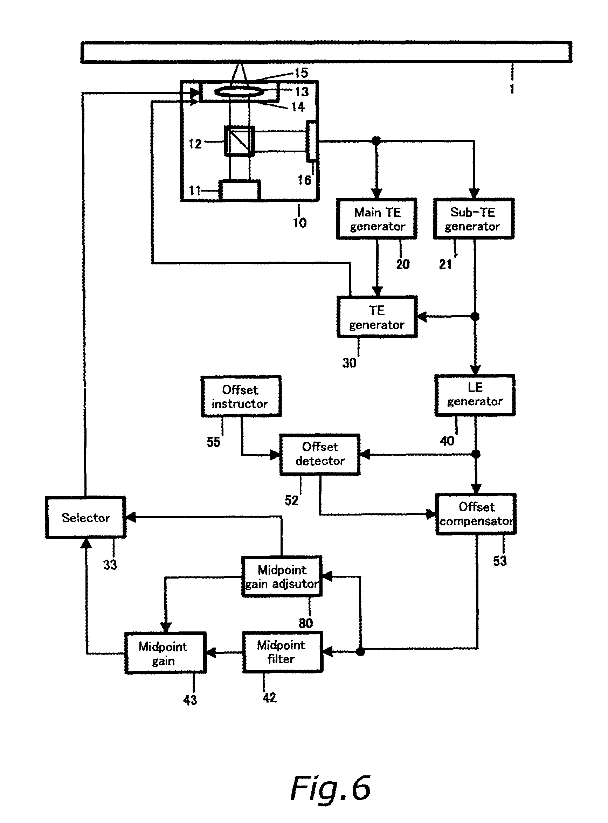

An operation of a conventional optical disc apparatus will be described with reference to Figure 6. In Figure 6, convergence irradiation unit includes a semiconductor laser 11 and a condensing lens 13. Track moving unit is a tracking actuator 15. Main track error detection unit is a main TE generator 20. Sub-track error detection unit is a sub-TE generator 21. Lens shift error generation unit is an LE generator 40. Lens shift control unit is a midpoint filter 42 and a midpoint gain 43. Offset compensation unit includes an offset compensator 53 and an offset detector 52. Offset instruction unit is an offset instructor 55. Track error detection unit is a TE generator 30.

An optical head 10 includes the semiconductor laser 11, the condensing lens 13, a beam splitter 12, a focus actuator 14, a tracking actuator 15, and a photodetector 16. A light beam emitted from the semiconductor laser 11 passes through the beam splitter 12 and is converged on an optical disc 1 having a disc shape by the condensing lens 13. The light beam reflected off the optical disc again passes through the condensing lens 13, and reflected off the beam splitter 12 to impinge upon the photodetector 16. The condensing lens 13 is supported by an elastic body (not shown), and is moved in the focus direction by an electromagnetic force when current flows through the focus actuator 14. The condensing lens 13 is moved in the tracking direction by an electromagnetic force when current flows through the tracking actuator 15. The photodetector 16 sends detected light amount signals to the main TE generator 20 and the sub-TE generator 21.

As a method for detecting a tracking error by an optical disc apparatus, a method using one beam which is called a push-pull (hereinafter, referred to as PP) method is known. This method requires a simpler structure than that a three-beam method. Further, its use efficiency of the laser light amount is high. Thus, this method is suitable for a recordable optical disc apparatus which requires a large laser output. However, when a lens shift in the tracking direction of the condensing lens 13 occurs, an offset is generated in a tracking error signal (hereinafter, referred to as TE signal). For removing the offset, a mechanism which enables fast responding is required. This causes an increase in the cost.

An advanced type PP method (hereinafter, referred to as APP), which has a reduced offset in a TE signal when the condensing lens is displaced, has been proposed (see, for example, Reference 2).

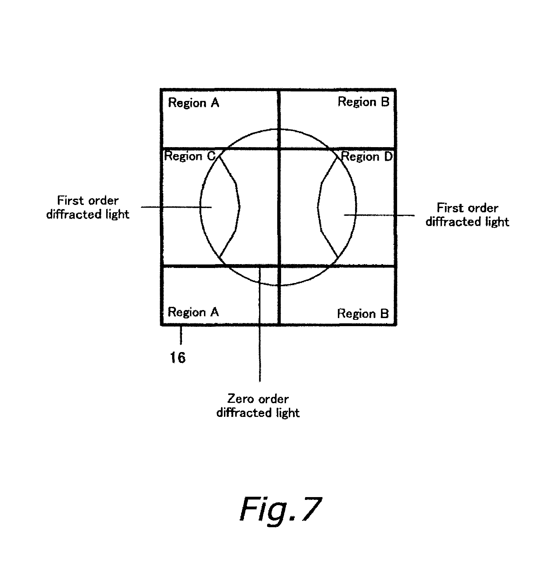

Figure 7 shows details of the photodetector 16. The photodetector 16 has divided six regions, and generates a signal in accordance with the amounts of the light received in the respective regions. In the divided regions C and D, zero order diffracted light and ±1 order diffracted light overlap and intervene one another. The zero order diffracted light is the light reflected off a recording surface of the optical disc 1 without diffraction. The ±1 order diffracted light is the light diffracted and reflected in accordance with a feature of the track shape on the recording surface of the optical disc 1. The divided regions A and B receive only the zero order diffracted light reflected off the recording surface of the optical disc 1 without diffraction.

In the PP method, a TE signal is obtained by calculation (A+C) - (B+D). Thus, a position of the light beam on the photodetector is displaced in a lateral direction in Figure 7 due to a lens shift of the condensing lens 13, which causes the zero order diffracted light to be in an imbalanced state, and results in an offset.

In the APP method, the TE signal is obtained by calculation (C-D) - K(A-B). The main TE generator 20 performs calculation C-D, and the sub-TE generator 21 performs calculation A-B. The signal from the main TE generator 20 has an offset due to a lens shift of the condensing lens 13 in the same way as the signal obtained in the PP method does. The signal from the sub-TE generator 21 also has a similar offset. In the TE generator 30, the signal from the sub-TE generator 21 is multiplied by a mixing ratio in accordance with a ratio of the light amounts at the regions A and B and the regions C and D, which is then subtracted from the signal from the main TE generator 20. In this way, a TE signal which does not have an offset due to a lens shift of the condensing lens 13 can be generated.

The LE generator 40 generates an LE signal in accordance with the signal from the sub-TE generator 21, and sends to the offset compensator 53 and the offset detector 52. The offset instructor 55 sends a signal which will have a rising edge to the offset detector 52 at timing when offset adjustment is performed during startup. When the offset detector 52 detects a rising edge of the signal from the offset instructor 55, it obtains and stores a signal from the LE generator 40, and then continues to send the stored level to the offset compensator 53. The offset compensator 53 calculates a difference between the signal from the LE generator 40 and the signal from the offset detector 52, and sends the difference to the midpoint filter 42 and a midpoint gain adjustor 80. The midpoint filter 42 generates a driving signal such that the signal from the offset compensator 53 becomes zero, and sends the driving signal to the tracking actuator 15 via the midpoint gain 43 and a selector 33. The midpoint gain adjustor 80 sends a driving signal for adjustment to the tracking actuator 15 via the selector 33, and obtains a signal from the offset compensator 53 at the moment to calculate a gain value and send it to the midpoint gain 43. The midpoint gain 43 amplifies the signal from the midpoint filter 42 based on the gain value from the midpoint gain adjustor 80 and sends it to the selector 33. The selector 33 selects either the signal from the midpoint gain 43 or the signal from the midpoint gain adjustor 80 and sends it to tracking actuator 15.

In an optical disc apparatus, one of the important functions is so-called fast random access. This is a function which utilizes a feature that information tracks run on one plane. A focus of a light beam is moved in a radial direction for searching target information. When fast random access is performed, if the number of information tracks which the focus of the light beam traverses, i.e., so-called access number, is several tens, the access can be achieved by only moving the condensing lens 13 in the optical head 10. However, if the number is few hundreds or more, the focus of the light beam has to travel beyond the range the condensing lens 13 can move within the optical head 10. Therefore, the optical head 10 itself has to be moved.

When a rough search operation is performed in an optical disc apparatus, the condensing lens 13 is shaken due to acceleration of the optical head 10, so that lens shift of the condensing lens 13 occurs when the condensing lens arrives at a target track. If lens shift of the condensing lens 13 occurs, the actuator's sensitivity deteriorates or oscillation of the actuator is promoted. Further, recording and reproduction signals may be degraded. Thus, during the rough search operation, in order to prevent lens shift of the condensing lens 13 with respect to the optical head 10, an amount of lens shift is detected by the LE generator 40 or the like, and the midpoint filter 42 drives the tracking actuator 15 via the midpoint gain 43 and the selector 33 such that the detected signal is zero. Such a lens shift control secures a stable rough search operation and prevention of degradation of recording and reproducing signals (see, for example, Reference 3).

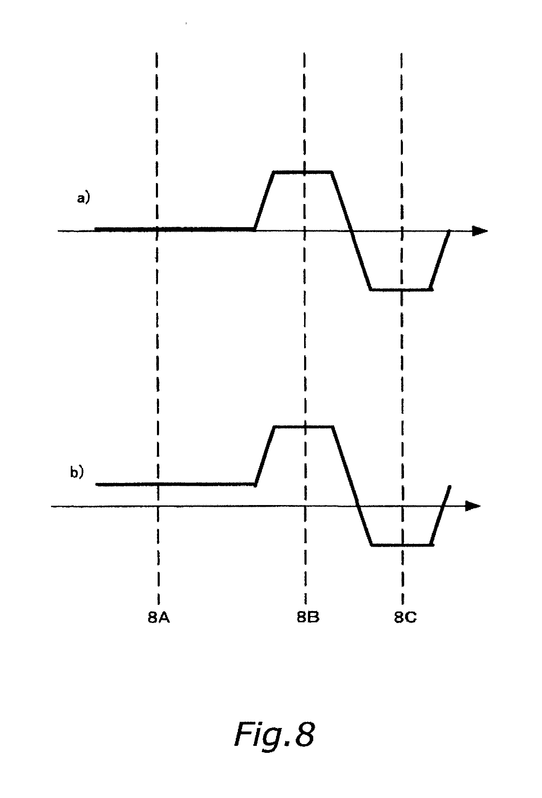

With reference to Figure 8, compensation of an offset and a gain in the lens shift control according to the background art will be described. Figure 8a) shows a signal from the midpoint gain adjuster 80 to the selector 33, and Figure 8b) shows a signal from the LE generator 40. In Figure 8, a horizontal axis represents time.

The signal generated by the LE generator 40 has an offset due to an influence of a circuit or the like. Even when the signal is zero, the amount of lens shift of the condensing lens 13 is not always zero. For compensating such an offset variation, the selector 33 first selects a signal from the midpoint gain adjuster 80 and sends it to the tracking actuator 15. At timing 8A shown in Figure 8, the offset detector 52 obtains a signal from the LE generator 40 when the signal to be sent from the midpoint gain adjuster 80 to the tracking actuator 15 via the selector 33 is zero, and sends it to the offset compensator 53 to perform compensation of an offset.

Detection sensitivities for a signal generated by the LE generator 40 vary among the apparatuses. Thus, a loop gain of the lens shift control cannot be maintained constant with a fixed gain. For compensating the gain variance, the selector 33 first selects a signal from the midpoint gain adjuster 80 and sends it to the tracking actuator 15. At timing 8B shown in Figure 8, the midpoint gain adjuster 80 obtains a signal which can be obtained from the LE generator 40 via the offset compensator 53 when the signal to be sent to the tracking actuator 15 via the selector 33 has a positive value. At timing 8C shown in Figure 8, the midpoint gain adjuster 80 obtains a signal which can be obtained from the LE generator 40 via the offset compensator 53 when the signal to be sent to the tracking actuator 15 via the selector 33 has a negative value. The midpoint gain adjuster 80 obtains detection sensitivity for the signal from the LE generator 40 with respect to lens shift of the condensing lens 13 based on the obtained two measured values. The midpoint gain adjuster 80 sends a gain value such that a loop gain of lens shift control has a predetermined value to the midpoint gain 43 to perform compensation of the gain.
Reference 1: Japanese Laid-Open Publication No. 52-80802
Reference 2: Japanese Patent Application No. 9-194895
Reference 3: Japanese Laid-Open Publication No. 1991-292576

### DISCLOSURE OF THE INVENTION

### (Problems to be solved by the invention)

An offset in an optical apparatus can be classified into a stray light offset generated in an optical system and a circuit offset generated in a circuit system. There is a trend that an absorption rate of a recording film increases for improving a recording sensitivity as a transfer rate of an optical disc 1 increases. Therefore, a reflectance of the recording film decreases, and thus, a small signal has to be amplified to be large. Since amplification rate is increased, an offset has more influence on the detected signal, particularly, the circuit offset variance due to temperature change has more influence. Therefore, it is required to improve precision in the offset compensation for the signal from the LE generator 40 and to follow the temperature change in the lens shift control,.

As the optical disc 1 becomes denser, the lens shift of the condensing lens 13 has more influence on the degradation of the recording and reproducing signals. In order to alleviate such influence, more precise lens shift control is required, and more precise offset compensation and gain compensation in the lens shift control are also required.

As described above, although more precise compensation is required, if an startup time of the apparatus is too long, there are such problems that recording cannot be started immediately when users want to record, or recording and reproduction signals may be interrupted because an adjustment for following the temperature change takes time. Thus, it is required that offset compensation and gain compensation of lens shift control should be achieved in a short period of time.

The present invention has been achieved to solve the above-described problems, and has an object to provide an optical disc apparatus which can adjust a gain and an offset in lens shift control with a high precision in a short period of time..

### (Means for solving the problems)

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; offset compensation unit for compensating an offset of the signal from the lens shift error generation unit; apparatus state output unit for outputting a signal indicating an apparatus state as a search operation, a recording operation, a reproduction operation, or waiting; and offset instruction unit for giving instructions to the offset compensation unit so as to perform circuit offset compensation at timing when the signal from the apparatus state output unit is switched to the search operation from any of the other states.

Herein, timing when the signal from the apparatus state output unit is switched to the search operation from other states is, for example, immediately before search operation.

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; offset compensation unit for compensating an offset of the signal from the lens shift error generation unit; apparatus state output unit for outputting a signal indicating an apparatus state as a search operation, a recording operation, a reproduction operation, or waiting; and offset instruction unit for giving instructions to the offset compensation unit so as to perform circuit offset compensation at timing when the signal from the apparatus state output unit is switched from the search operation to any of the other states.

Herein, the timing when the signal from the apparatus state output unit is switched from the search operation to other states is, for example, immediately after the search operation.

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; offset compensation unit for compensating an offset of the signal from the lens shift error generation unit; apparatus state output unit for outputting a signal indicating an apparatus state as a search operation, a recording operation, a reproduction operation, or waiting; and offset instruction unit for giving instructions to the offset compensation unit so as to perform circuit offset compensation at timing when the signal from the apparatus state output unit is switched from the recording or reproduction operation to any of the other states.

Herein, the timing when the signal from the apparatus state output unit is switched from the recording or reproduction operation to other states is, for example, immediately after the recording or reproduction operation.

In the optical disc apparatus according to the present invention, the offset compensation unit includes stray light compensation unit for compensating an offset by detecting a difference between a stray light offset value and a circuit offset value at startup.

In the optical disc apparatus according to the present invention, the offset instruction unit gives instructions so as to perform the circuit offset compensation only when the number of tracks to be searched is a predetermined number or higher.

In the optical disc apparatus according to the present invention, the offset instruction unit gives instructions so as to perform the circuit offset compensation only when the number of tracks to be searched is a predetermined number or lower.

The optical disc apparatus according to the present invention further comprises: focus movement unit for moving a focal point of the light beam converged by the convergence irradiation unit in a direction normal to an information surface of the information carrier; focus error detection unit for generating a signal in accordance with a shift in a position of the focal point of the light beam with respect to the information surface of the information carrier; focus control unit for driving the focus movement unit such that the focal point of the light beam follow the information surface of the information carrier in response to a signal of focus shift signal detection unit; and focus hold unit for holding the focus control unit when a circuit offset is adjusted.

The optical disc apparatus according to the present invention further comprises: track error detection unit for detecting a signal in accordance with the positions of the light beam and the track based on the signal from the main track error detection unit and the signal from the sub-track error detection unit; tracking control unit for driving and controlling the track movement unit based on an output from the track error detection unit so as to correctly scan tracks of the information carrier; and track hold unit for holding the tracking control unit when a circuit offset is adjusted.

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; main light amount detection unit for detecting an aggregate sum of signals used by the main track error detection unit; sub-light amount detection unit for detecting an aggregate sum of signals used by the sub-track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; light amount ratio detection unit for detecting a ratio in levels of a signal from the main light amount detection unit and a signal from the sub-light amount detection unit; and gain calculation unit for calculating a gain in lens shift control based on a signal from the light amount ratio detection unit.

The optical disc apparatus according to the present invention further comprises: track error detection unit for detecting a signal in accordance with positions of the light beam and the track based on the signal from the main track error detection unit and the signal from the sub-track error detection unit; tracking control unit for driving and controlling the track movement unit based on an output from the track error detection unit so as to correctly scan tracks of the information carrier; tracking control gain adjustment unit for adjusting a gain of the tracking control unit such that a band of the tracking control unit is at a predetermined value; and gain reflection unit for reflecting the gain obtained by the tracking control gain adjustment unit on the gain in the lens shift control.

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; main track error inspection unit for detecting a DC component of the signal from the main track error detection unit which varies in accordance with an amount of shift of the track movement unit; and gain calculation unit for calculating a gain in lens shift control based on the signal from the main track error inspection unit.

The optical disc apparatus according to the present invention further comprises: track error detection unit for detecting a signal in accordance with the positions of the light beam and the track based on the signal from the main track error detection unit and the signal from the sub-track error detection unit; and track error mixing ratio adjustment unit for adjusting a mixing ratio between the signal from the main track error detection unit and the signal from the sub-track error detection unit such that an output signal does not change in accordance with the amount of shift of the track movement unit by shifting the track movement unit and measuring a DC level of the signals from the track error detection unit to be stored in a memory, wherein the main track error inspection unit detects a DC component of the signal from the main track error detection unit which varies in accordance with the amount of shift of the track movement unit in accordance with a content stored in the memory of the track error mixing ratio adjustment unit.

In the optical disc apparatus according to the present invention, the main track error inspection unit detects a DC component of the signal from the main track error detection unit which varies in accordance with the amount of shift of the track movement unit by obtaining a first order straight line approximation equation from the measured points.

In the optical disc apparatus according to the present invention, the main track error inspection unit detects a DC component of the signal from the main track error detection unit which varies in accordance with the amount of shift of the track movement unit by obtaining a straight line from measurement results at two points where the mixing ratios are small.

The optical disc apparatus according to the present invention further comprises gain light amount compensation unit for compensating a gain in lens shift control in accordance with a change in the signal from the main track error detection unit.

An optical disc semiconductor according to the present invention comprises: main track error detection unit for detecting a signal in accordance with positions of a light beam and a track; sub-track error detection unit for detecting a signal having a ratio between a DC component due to a shift of the light beam within an optical head and an AC component in accordance with the position of the track, the ratio being different from that of the signal from the main track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; offset compensation unit for compensating an offset of the signal from the lens shift error generation unit; and offset instruction unit for giving instructions to the offset compensation unit so as to perform circuit offset compensation at timing when a signal indicating an apparatus state as a search operation, a recording operation, a reproduction operation, or waiting is switched to the search operation from any of the other states.

An optical disc semiconductor according to the present invention comprises: main track error detection unit for detecting a signal in accordance with positions of a light beam and a track; sub-track error detection unit for detecting a signal having a ratio between a DC component due to a shift of an light beam within an optical head and an AC component in accordance with the position of the track, the ratio being different from that of the signal from the main track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; offset compensation unit for compensating an offset of the signal from the lens shift error generation unit; and offset instruction unit for giving instructions to the offset compensation unit so as to perform circuit offset compensation at timing when a signal indicating an apparatus state as a search operation, a recording operation, a reproduction operation, or waiting is switched from the search operation to any of the other states.

An optical disc semiconductor according to the present invention comprises: main track error detection unit for detecting a signal in accordance with positions of a light beam and a track; sub-track error detection unit for detecting a signal having a ratio between a DC component due to a shift of the light beam within an optical head and an AC component in accordance with the position of the track, the ratio being different from that of the signal from the main track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; offset compensation unit for compensating an offset of the signal from the lens shift error generation unit; and offset instruction unit for giving instructions to the offset compensation unit so as to perform circuit offset compensation at timing when a signal indicating an apparatus state as a search operation, a recording operation, a reproduction operation, or waiting is switched from the recording or reproduction operation to any of the other states.

In the optical disc semiconductor according to the present invention, the offset compensation unit includes stray light compensation unit for compensating an offset by detecting a difference between a stray light offset value and a circuit offset value at startup.

In the optical disc semiconductor according to the present invention, the offset instruction unit gives instructions so as to perform the circuit offset compensation only when the number of tracks to be searched is a predetermined number or higher.

In the optical disc semiconductor according to the present invention, the offset instruction unit gives instructions so as to perform the circuit offset compensation only when the number of tracks to be searched is a predetermined number or lower.

The optical disc semiconductor according to the present invention further comprises: focus error detection unit for generating a signal in accordance with a shift in a position of a focal point of the light beam with respect to an information surface of an information carrier; focus control unit for driving to change a convergence state of the light beam such that the focal point of the light beam follows the information surface of the information carrier in response to a signal of focus shift signal detection unit; and focus hold unit for holding the focus control unit when a circuit offset is adjusted.

The optical disc semiconductor according to the present invention further comprises: track error detection unit for detecting a signal in accordance with the positions of the light beam and the track based on the signal from the main track error detection unit and the signal from the sub-track error detection unit; tracking control unit for driving and controlling a focal point of the light beam in parallel to a surface of an information carrier based on an output from the track error detection unit so as to correctly scan the tracks of the information carrier; and track hold unit for holding the tracking control unit when a circuit offset is adjusted.

An optical disc semiconductor according to the present invention comprises: main track error detection unit for detecting a signal in accordance with positions of a light beam and a track; sub-track error detection unit for detecting a signal having a ratio between a DC component due to a shift of the light beam within an optical head and an AC component in accordance with the position of the track, the ratio being different from that of the signal from the main track error detection unit; main light amount detection unit for detecting an aggregate sum of signals used by the main track error detection unit; sub-light amount detection unit for detecting an aggregate sum of signals used by the sub-track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; light amount ratio detection unit for detecting a ratio in levels of a signal from a main light amount detection unit and a signal from the sub-light amount detection unit; and gain calculation unit for calculating a gain in lens shift control based on a signal from the light amount ratio detection unit.

The optical disc semiconductor according to the present invention further comprises: track error detection unit for detecting a signal in accordance with the positions of the light beam and the track based on the signal from the main track error detection unit and the signal from the sub-track error detection unit; tracking control unit for driving and controlling a focal point of the light beam in parallel with a surface of the information carrier based on an output from the track error detection unit so as to correctly scan the tracks of the information carrier; tracking control gain adjustment unit for adjusting a gain of the tracking control unit such that a band of the tracking control unit is at a predetermined value; and gain reflection unit for reflecting the gain obtained by the tracking control gain adjustment unit on the gain in the lens shift control.

An optical disc semiconductor according to the present invention comprises: main track error detection unit for detecting a signal in accordance with positions of a light beam and tracks; sub-track error detection unit for detecting a signal having a ratio between a DC component due to a shift of the light beam within an optical head and an AC component in accordance with the position of the track, the ratio being different from that of the signal from the main track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; main track error inspection unit for detecting a DC component of the signal from the main track error detection unit which varies in accordance with the amount of shift; and gain calculation unit for calculating a gain in lens shift control based on the signal from the main track error detection unit.

The optical disc semiconductor according to the present invention further comprises: track error detection unit for detecting a signal in accordance with positions of the light beam and the track based on the signal from the main track error detection unit and the signal from the sub-track error detection unit; and track error mixing ratio adjustment unit for adjusting a mixing ratio between the signal from the main track error detection unit and the signal from the sub-track error detection unit such that an output signal does not change in accordance with the amount of shift of the light beam by shifting the light beam in parallel to a surface of an information carrier and measuring a DC level of the signals from the track error detection unit to be stored in a memory, wherein the main track error inspection unit detects a DC component of the signal from the main track error detection unit which varies in accordance with the amount of shift in accordance with a content stored in the memory of the track error mixing ratio adjustment unit.

In the optical disc semiconductor according to the present invention, the main track error inspection unit detects a DC component of the signal from the main track error detection unit which varies in accordance with the amount of shift by obtaining a first order straight line approximation equation from the measured points.

In the optical disc semiconductor according to the present invention, the main track error inspection unit detects a DC component of the signal from the main track error detection unit which varies in accordance with the amount of shift by obtaining a straight line from measurement results at two points where the mixing ratios are small.

The optical disc semiconductor according to the present invention further comprises gain light amount compensation unit for compensating a gain in lens shift control in accordance with a change in the signal from the main track error detection unit.

### (Effect of the invention)

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; offset compensation unit for compensating an offset of the signal from the lens shift error generation unit; apparatus state output unit for outputting a signal indicating an apparatus state as a search operation, a recording operation, a reproduction operation, or waiting; and offset instruction unit for giving instructions to the offset compensation unit so as to perform circuit offset compensation at timing when the signal from the apparatus state output unit is switched to the search operation from any of the other states, thereby suppressing a variation in a circuit offset.

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; offset compensation unit for compensating an offset of the signal from the lens shift error generation unit; apparatus state output unit for outputting a signal indicating an apparatus state as a search operation, a recording operation, a reproduction operation, or waiting; and offset instruction unit for giving instructions to the offset compensation unit so as to perform circuit offset compensation at timing when the signal from the apparatus state output unit is switched from the search operation to any of the other states, thereby suppressing a variation in the circuit offset.

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; offset compensation unit for compensating an offset of the signal from the lens shift error generation unit; apparatus state output unit for outputting a signal indicating an apparatus state as a search operation, a recording operation, a reproduction operation, or waiting; and offset instruction unit for giving instructions to the offset compensation unit so as to perform circuit offset compensation at timing when the signal from the apparatus state output unit is switched from the recording or reproduction operation to any of the other states, thereby suppressing a variation in the circuit offset.

In the optical disc apparatus according to the present invention, the offset compensation unit includes stray light compensation unit for compensating an offset by detecting a difference between a stray light offset value and a circuit offset value at startup, thereby suppressing a compensation shift when an offset due to stray light is large.

In the optical disc apparatus according to the present invention, the offset instruction unit gives instructions so as to perform the circuit offset compensation only when the number of tracks to be searched is a predetermined number or higher, thereby reducing an expected value of search time including adjustment time.

In the optical disc apparatus according to the present invention, the offset instruction unit gives instructions so as to perform the circuit offset compensation only when the number of tracks to be searched is a predetermined number or lower, thereby reducing a maximum value of search time including adjustment time.

The optical disc apparatus according to the present invention further comprises: focus movement unit for moving a focal point of the light beam converged by the convergence irradiation unit in a direction normal to an information surface of the information carrier; focus error detection unit for generating a signal in accordance with a shift in a position of the focal point of the light beam with respect to the information surface of the information carrier; focus control unit for driving the focus movement unit such that the focal point of the light beam follows the information surface of the information carrier in response to a signal of focus shift signal detection unit; and focus hold unit for holding the focus control unit when a circuit offset is adjusted, thereby reducing a time for readjusting focus control and enabling circuit offset adjustment in a short period of time.

The optical disc apparatus according to the present invention further comprises: track error detection unit for detecting a signal in accordance with the positions of the light beam and the track based on the signal from the main track error detection unit and the signal from the sub-track error detection unit; tracking control unit for driving and controlling the track movement unit based on an output from the track error detection unit so as to correctly scan tracks of the information carrier; and track hold unit for holding the tracking control unit when a circuit offset is adjusted, thereby reducing a time for readjusting tracking control and enabling circuit offset adjustment in a short period of time.

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction to transverse the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; main light amount detection unit for detecting an aggregate sum of signals used by the main track error detection unit; sub-light amount detection unit for detecting an aggregate sum of signals used by the sub-track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; light amount ratio detection unit for detecting a ratio in levels of a signal from the main light amount detection unit and a signal from the sub-light amount detection unit; and gain calculation unit for calculating a gain in lens shift control based on a signal from the light amount ratio detection unit, thereby obtaining a lens shift control gain in a short period of time without a lens shift during measurement.

The optical disc apparatus according to the present invention further comprises: track error detection unit for detecting a signal in accordance with positions of the light beam and the track based on the signal from the main track error detection unit and the signal from the sub-track error detection unit; tracking control unit for driving and controlling the track movement unit based on an output from the track error detection unit so as to correctly scan tracks of the information carrier; tracking control gain adjustment unit for adjusting a gain of the tracking control unit such that a band of the tracking control unit is at a predetermined value; and gain reflection unit for reflecting the gain obtained by the tracking control gain adjustment unit on the gain in the lens shift control, thereby obtaining a lens shift control gain which conforms to a driving system variance or the like without measurement.

An optical disc apparatus according to the present invention comprises: convergence irradiation unit for converging and irradiating a light beam on an information carrier having tracks for recording and reproducing information; track movement unit for moving the light beam converged by the convergence irradiation unit in a direction transverse to the tracks; main track error detection unit for detecting a signal in accordance with positions of the light beam and the track; sub-track error detection unit for detecting a signal having a ratio between a DC component due to a shift of the track movement unit and an AC component in accordance with the position of the track, the ratio being different from that of the signal from the main track error detection unit; lens shift error generation unit for generating a signal in accordance with an amount of shift of the track movement unit from the signal from the main track error detection unit and the signal from the sub-track error detection unit; lens shift control unit for controlling the amount of shift of the track movement unit at a predetermined value based on the signal from the lens shift error generation unit; main track error inspection unit for detecting a DC component of the signal from the main track error detection unit which varies in accordance with an amount of shift of the track movement unit; and gain calculation unit for calculating a gain in lens shift control based on the signal from the main track error detection unit, thereby obtaining the lens shift control gain without individually measuring lens shift properties of LE.

The optical disc apparatus according to the present invention further comprises: track error detection unit for detecting a signal in accordance with positions of the light beam and the track based on the signal from the main track error detection unit and the signal from the sub-track error detection unit; and track error mixing ratio adjustment unit for adjusting a mixing ratio between the signal from the main track error detection unit and the signal from the sub-track error detection unit such that an output signal does not change in accordance with the amount of shift of the track movement unit by shifting the track movement unit and measuring a DC level of the signals from the track error detection unit to be stored in a memory, wherein the main track error inspection unit detects a DC component of the signal from the main track error detection unit which varies in accordance with the amount of shift of the track movement unit in accordance with a content stored in the memory of the track error mixing ratio adjustment unit, thereby obtaining the lens shift control gain without individually measuring lens shift properties of LE.

In the optical disc apparatus according to the present invention, the main track error inspection unit detects a DC component of the signal from the main track error detection unit which varies in accordance with the amount of shift of the track movement unit by obtaining a first order straight line approximation equation from the measured points, thereby performing gain estimation with a high precision from a plurality of points.

In the optical disc apparatus according to the present invention, the main track error inspection unit detects a DC component of the signal from the main track error detection unit which varies in accordance with the amount of shift of the track movement unit by obtaining a straight line from measurement results at two points where the mixing ratios are small, thereby performing gain estimation with a high precision even with low linearity.

The optical disc apparatus according to the present invention further comprises gain light amount compensation unit for compensating a gain in lens shift control in accordance with a change in the signal from the main track error detection unit, thereby forming a simple AGC system.

An optical disc semiconductor according to the present invention comprises: main track error detection unit for detecting a signal in accordance with positions of a light beam and a track; sub-track error detection unit for detecting a signal having a ratio between a DC component due to a shift of the light beam within an optical head and an AC component in accordance with the position of the track, the ratio being different from that of the signal from the main track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; offset compensation unit for compensating an offset of the signal from the lens shift error generation unit; and offset instruction unit for giving instructions to the offset compensation unit so as to perform circuit offset compensation at timing when a signal indicating an apparatus state as a search operation, a recording operation, a reproduction operation, or waiting is switched to the search operation from any of the other states, thereby suppressing a variation in a circuit offset.

An optical disc semiconductor according to the present invention comprises: main track error detection unit for detecting a signal in accordance with positions of a light beam and a track; sub-track error detection unit for detecting a signal having a ratio between a DC component due to a shift of the light beam within an optical head and an AC component in accordance with the position of the track, the ratio being different from that of the signal from the main track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; offset compensation unit for compensating an offset of the signal from the lens shift error generation unit; and offset instruction unit for giving instructions to the offset compensation unit so as to perform circuit offset compensation at timing when a signal indicating an apparatus state as a search operation, a recording operation, a reproduction operation, or waiting is switched from the search operation to any of the other states, thereby suppressing a variation in the circuit offset.

An optical disc semiconductor according to the present invention comprises: main track error detection unit for detecting a signal in accordance with positions of a light beam and a track; sub-track error detection unit for detecting a signal having a ratio between a DC component due to a shift of the light beam within an optical head and an AC component in accordance with the position of the track, the ratio being different from that of the signal from the main track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; offset compensation unit for compensating an offset of the signal from the lens shift error generation unit; and offset instruction unit for giving instructions to the offset compensation unit so as to perform circuit offset compensation at timing when a signal indicating an apparatus state as a search operation, a recording operation, a reproduction operation, or waiting is switched from the recording or reproduction operation to any of the other states, thereby suppressing a variation in the circuit offset.

In the optical disc semiconductor according to the present invention, the offset compensation unit includes stray light compensation unit for compensating an offset by detecting a difference between a stray light offset value and a circuit offset value at startup, thereby suppressing a compensation shift when an offset due to stray light is large.

In the optical disc semiconductor according to the present invention, the offset instruction unit gives instructions so as to perform the circuit offset compensation only when the number of tracks to be searched is a predetermined number or higher, thereby reducing an expected value of search time including adjustment time.

In the optical disc semiconductor according to the present invention, the offset instruction unit gives instructions so as to perform the circuit offset compensation only when the number of tracks to be searched is a predetermined number or lower, thereby reducing a maximum value of search time including adjustment time.

The optical disc semiconductor according to the present invention further comprises: focus error detection unit for generating a signal in accordance with a shift in a position of a focal point of the light beam with respect to an information surface of an information carrier; focus control unit for driving to change a convergence state of the light beam such that the focal point of the light beam follows the information surface of the information carrier in response to a signal of focus shift signal detection unit; and focus hold unit for holding the focus control unit when a circuit offset is adjusted, thereby reducing a time for readjusting focus control and enabling circuit offset adjustment in a short period of time.

The optical disc semiconductor according to the present invention further comprises: track error detection unit for detecting a signal in accordance with the positions of the light beam and the track based on the signal from the main track error detection unit and the signal from the sub-track error detection unit; tracking control unit for driving and controlling a focal point of the light beam in parallel to a surface of an information carrier based on an output from the track error detection unit so as to correctly scan tracks of the information carrier; and track hold unit for holding the tracking control unit when a circuit offset is adjusted, thereby reducing a time for readjusting tracking control and enabling circuit offset adjustment in a short period of time.

An optical disc semiconductor according to the present invention comprises: main track error detection unit for detecting a signal in accordance with positions of a light beam and a track; sub-track error detection unit for detecting a signal having a ratio between a DC component due to a shift of the light beam within an optical head and an AC component in accordance with the position of the track, the ratio being different from that of the signal from the main track error detection unit; main light amount detection unit for detecting an aggregate sum of signals used by the main track error detection unit; sub-light amount detection unit for detecting an aggregate sum of signals used by the sub-track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; light amount ratio detection unit for detecting a ratio in levels of a signal from a main light amount detection unit and a signal from the sub-light amount detection unit; and gain calculation unit for calculating a gain in lens shift control based on a signal from the light amount ratio detection unit, thereby obtaining a lens shift control gain in a short period time without a lens shift during measurement.

The optical disc semiconductor according to the present invention further comprises: track error detection unit for detecting a signal in accordance with positions of the light beam and the track based on the signal from the main track error detection unit and the signal from the sub-track error detection unit; tracking control unit for driving and controlling a focal point of the light beam in parallel with a surface of an information carrier based on an output from the track error detection unit so as to correctly scan the tracks of the information carrier; tracking control gain adjustment unit for adjusting a gain of the tracking control unit such that a band of the tracking control unit is at a predetermined value; and gain reflection unit for reflecting the gain obtained by the tracking control gain adjustment unit on the gain in the lens shift control, thereby obtaining a lens shift control gain which conforms to variance in a driving system or the like without measurement.

An optical disc semiconductor according to the present invention comprises: main track error detection unit for detecting a signal in accordance with positions of a light beam and a track; sub-track error detection unit for detecting a signal having a ratio between a DC component due to a shift of the light beam within an optical head and an AC component in accordance with the position of the track, the ratio being different from that of the signal from the main track error detection unit; lens shift error generation unit for generating a signal in accordance with an amount of shift of the light beam within the optical head from the signal from the main track error detection unit and the signal from the sub-track error detection unit; lens shift control unit for controlling the amount of shift of the light beam within the optical head at a predetermined value based on the signal from the lens shift error generation unit; main track error inspection unit for detecting a DC component of the signal from the main track error detection unit which varies in accordance with an amount of shift; and gain calculation unit for calculating a gain in lens shift control based on the signal from the main track error detection unit, thereby obtaining the lens shift control gain without individually measuring lens shift properties of LE.

The optical disc semiconductor according to the present invention further comprises: track error detection unit for detecting a signal in accordance with positions of the light beam and the track based on the signal from the main track error detection unit and the signal from the sub-track error detection unit; and track error mixing ratio adjustment unit for adjusting a mixing ratio between the signal from the main track error detection unit and the signal from the sub-track error detection unit such that an output signal does not change in accordance with the amount of shift of the light beam by shifting the light beam in parallel to a surface of an information carrier and measuring a DC level of the signals from the track error detection unit to be stored in a memory, wherein the main track error inspection unit detects a DC component of the signal from the main track error detection unit which varies in accordance with the amount of shift in accordance with a content stored in the memory of the track error mixing ratio adjustment unit, thereby obtaining the lens shift control gain without individually measuring lens shift properties of LE.

In the optical disc semiconductor according to the present invention, the main track error inspection unit detects a DC component of the signal from the main track error detection unit which varies in accordance with the amount of shift by obtaining a first order straight line approximation equation from the measured points, thereby performing gain estimation with a high precision from a plurality of points.

In the optical disc semiconductor according to the present invention, the main track error inspection unit detects a DC component of the signal from the main track error detection unit which varies in accordance with the amount of shift by obtaining a straight line from measurement results at two points where the mixing ratios are small, thereby performing gain estimation with a high precision even with low linearity.

The optical disc semiconductor according to the present invention further comprises gain light amount compensation unit for compensating a gain in lens shift control in accordance with a change in the signal from the main track error detection unit, thereby forming a simple AGC system.

### BRIEF DESCRIPTION OF THE DRAWINGS

Figure 1 is a block diagram showing a structure of Embodiment 1.
Figure 2a) is a diagram showing an exemplary output of a signal from an offset instructor to a semiconductor laser according to Embodiment 1; Figure 2b) is a diagram showing an exemplary output of a signal from an LE generator according to Embodiment 1; and Figure 2c) is a diagram showing an exemplary output of a signal from a circuit offset detector according to Embodiment 1.
Figure 3 is a block diagram showing a structure of Embodiment 2.
Figure 4 is a block diagram showing a structure of Embodiment 3.
Figure 5 is a diagram showing properties of TE signals measured by a mixing ratio adjustor and estimated by a property estimator according to Embodiment 3.
Figure 6 is a block diagram showing a structure according to the background art.
Figure 7 is a diagram showing details of a photodetector according to the background art
Figure 8a) is a diagram showing an exemplary output of a signal from a midpoint gain adjustor to a selector according to the background art; and Figure 8b) is a diagram showing an exemplary output of a signal from an LE generator according to the background art.

### REFERENCE NUMURALS

- 1: Optical disc
- 10: Optical head
- 11: Semiconductor laser
- 12: Beam splitter
- 13: Condensing lens
- 14: Focus actuator
- 15: Tracking actuator
- 16: Photodetector
- 20: Main TE generator
- 21: Sub-TE generator
- 30: TE generator
- 31: Tk filter
- 32: Tk gain
- 33: Selector
- 40: LE generator
- 41: LE gain
- 42: Midpoint filter
- 43: Midpoint gain
- 50: Circuit offset detector
- 51: Stray light offset detector
- 52: Offset detector
- 53: Offset compensator
- 54: Offset instructor
- 55: Offset instructor
- 56: Apparatus instructor
- 60: Main AS generator
- 61: Sub-AS generator
- 62: Ratio detector
- 63: Gain calculator
- 64: Gain reflector
- 70: Mixing ratio adjustor
- 71: Memory
- 72: Property estimator
- 73: Gain calculator
- 80: Midpoint gain adjustor

### BEST MODE FOR CARRYING OUT THE INVENTION

### Hereinafter, embodiments of the present invention will be described.

### (Embodiment 1)

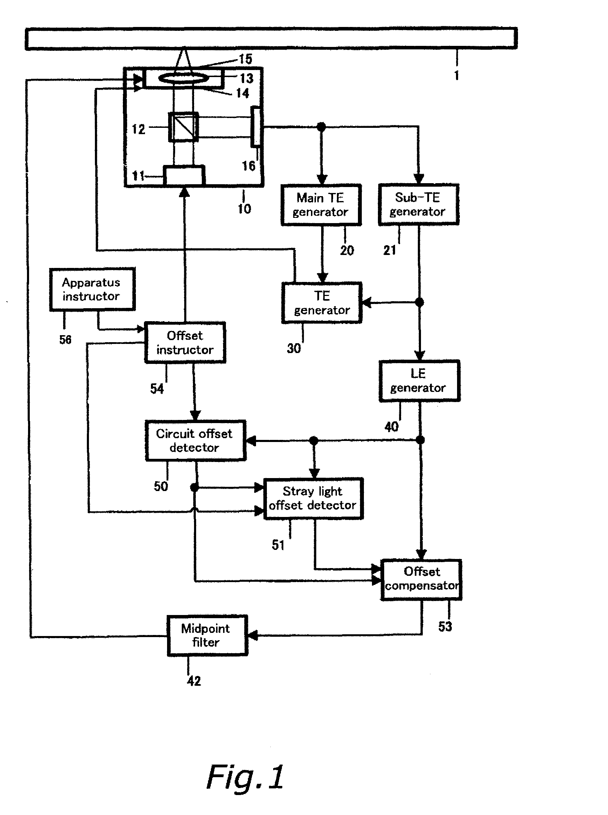

Figure 1 is a block diagram of an optical apparatus according to Embodiment 1. The elements in Figure 1 same as those in Figure 6 illustrating the background art are referred to by the same reference numerals and the explanations thereof are omitted. The offset compensation unit includes a circuit offset detector 50, a stray light offset detector 51, and an offset compensator 53. The offset instruction unit is an offset instructor 54. The stray light compensation unit is a stray light offset detector 51. The apparatus state output unit is an apparatus instructor 56.

An LE generator 40 sends a signal to the offset compensator 53, the circuit offset detector 50, and the stray light offset detector 51. The apparatus instructor 56 sends a signal which indicates one of search operation, recording operation, reproduction operation, and waiting to the offset instructor 54 in accordance with the apparatus state. The offset instructor 54 sends an instruction to turn off the light to a semiconductor laser 11 and sends a signal which will have a rising edge to the circuit offset detector 50 at timing for adjusting a circuit offset. The offset instructor 54 also sends a signal which will have a rising edge to the stray light offset detector 51 at timing for adjusting a stray light offset. When the circuit offset detector 50 detects a rising edge of the signal from the offset instructor 54, it obtains a signal from the LE generator 40 and stores the signal. Then, the circuit offset detector 50 keeps sending the stored level to the offset compensator 53 and the stray light offset detector 51. When the stray light offset detector 51 detects a rising edge of the signal from the offset instructor 54, it obtains a difference between the signal from the LE generator 40 and the signal from the circuit offset detector 50 and stores the difference. Then, the stray light offset detector 51 keeps sending the stored level to the offset compensator 53.

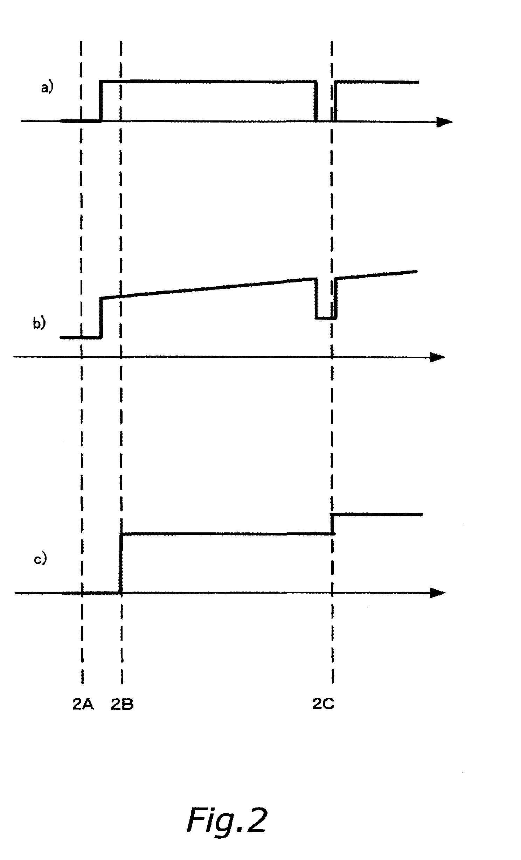

With reference to Figure 2, compensation of an offset in lens shift control in Embodiment 1 will be described. Figure 2a) shows a signal from the offset instructor 54 to the semiconductor laser 11. Figure 2b) shows a signal from the LE generator 40. Figure 2c) shows a signal from the circuit offset detector 50. In Figure 2, a horizontal axis represents time. The semiconductor laser 11 is lit when the signal from the offset instructor 54 is high and turned off when the signal is low. At timing 2A shown in Figure 2, when the semiconductor laser 11 is turned off, the circuit offset detector 50 obtains a signal from the LE generator 40 and sends the signal to the offset compensator 53 to compensate the offset due to the circuit. At timing 2B shown in Figure 2, when the semiconductor laser 11 is lit, the stray light offset detector 51 obtains a signal from the LE generator 40 and subtracts the offset due to the circuit previously obtained by the circuit offset detector 50. Then, the stray light offset detector 51 sends the result to the offset compensator 53 to compensate the offset due to stray light. The offset compensator 53 removes a sum of the offset due to the circuit and the offset due to the stray light from the signal from the LE generator 40 to achieve offset compensation. As shown in Figure 2b), an offset due to the circuit changes because of a change in temperature after compensation is performed. The semiconductor laser 11 is turned off for a short period of time at timing 2C shown in Figure 2 when a signal from the apparatus instructor 56 is switched to a search operation. During that period, the circuit offset detector 50 obtains the signal from the LE generator 40 and sends it to the offset compensator 53. In this way, it becomes possible to deal with a change caused by the temperature in an offset due to the circuit.

As described above, the offset of the signal from the LE generator 40 is divided into an offset due to the circuit and an offset due to the stray light, and the offset due to the circuit which is changed largely by the temperature is compensated again just before the rough search operation during which lens shift control is actually performed. This realizes highly precise lens shift control. Further, it becomes possible to shorten a period of time during which the semiconductor laser 11 is turned off, and to compensate for temperature change in the offset due to the circuit in a short period.

In Embodiment 1, circuit offset adjustment is performed just before the rough search operation. However, the circuit offset adjustment may be performed only when the number of tracks to be searched is a predetermined number or higher. Alternatively, the circuit offset adjustment may be performed only when the number of tracks to be searched is a predetermined number or lower. Furthermore, in Embodiment 1, the signal indicating an amount of lens shift of the condensing lens 13 is generated in the LE generator 40 using only the signal from the sub TE generator 21. Alternatively, the signals from both the main TE generator 20 and the sub TE generator 21 may be used. Further, a time period taken for readjusting the control can be shortened by holding focus control and tracking control when the semiconductor laser 11 is turned off.

The circuit offset adjustment is performed during the time period from when the apparatus instructor 56 outputs a signal indicating search operation till when the search operation is actually started. However, the search operation may be performed simultaneously with the circuit offset adjustment before it is finished. Specifically, the circuit offset adjustment may be performed at timing when the signal from the apparatus instructor 56 is switched to the state indicating the search operation from another state, or from the state indicating the search operation to another state. Alternatively, the circuit offset adjustment may be performed at timing when the signal from the apparatus instructor 56 is switched from the state indicating recording or reproduction operation to another state. By performing the circuit offset adjustment at timing as described above, an influence of temperature change on the circuit offset can be compensated at an appropriate timing.

### (Embodiment 2)

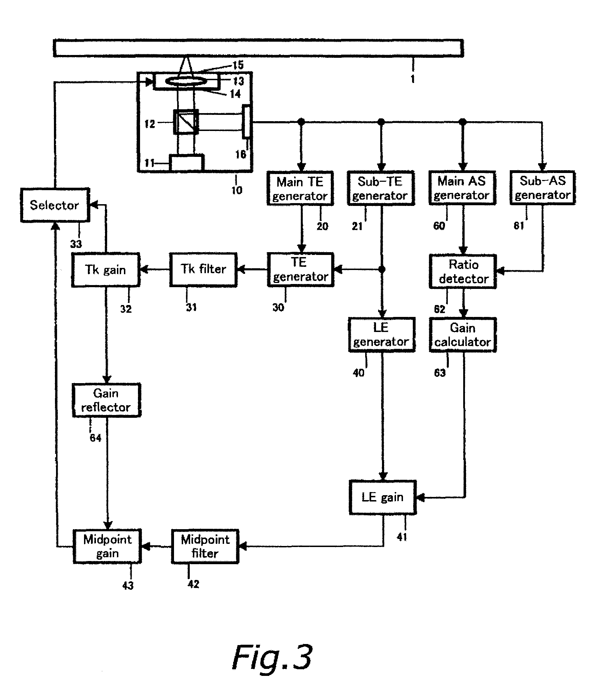

Figure 3 is a block diagram of an optical disc apparatus according to Embodiment 2. The elements in Figure 3 same as those in Figure 6 which illustrates background art are referred to by the same reference numerals and explanations thereof are omitted. The lens shift control unit includes a midpoint filter 42, an LE gain 41, and a midpoint gain 43. The main light amount detection unit is a main AS generator 60. The sub-light amount detection unit is a sub-AS generator 61. The gain calculation unit is a gain calculator 63. The light amount ratio detection unit is a ratio detector 62. The tracking control unit is a Tk filter 31 and a Tk gain 32. The gain reflection unit is a gain reflector 64.

The main AS generator 60 calculates an aggregate sum of signals from a photodetector 16 which a main TE generator 20 uses, and sends the summed signal to the ratio detector 62. The sub-AS generator 61 calculates an aggregate sum of signals from the photodetector 16 which a sub-TE generator 21 uses, and sends the summed signal to the ratio detector 62. The ratio detector 62 calculates a ratio between the signal from the main AS generator 60 and the signal from the sub-AS generator 61. Then, the ratio detector 62 sends the result to the gain calculator 63. The gain calculator 63 calculates a gain value based on the ratio information from the ratio detector 62, and sends it to the LE gain 41. The LE gain 41 amplifies the signal from a LE generator 40 based on the gain value from the gain calculator 63, and sends it to the midpoint filter 42. A TE generator 30 sends a signal to the Tk filter 31. The Tk filter 31 generates a driving signal such that the signal from the TE generator 30 becomes zero, and sends the driving signal to a tracking actuator 15 via the Tk gain 32 and a selector 33. The Tk gain 32 amplifies the signal from the Tk filter 31 and sends it to the selector 33. The Tk gain 32 also sends its gain value to the gain reflector 64. The gain reflector 64 obtains the gain value from the Tk gain 32 and sends it to the midpoint gain 43. The midpoint gain 43 amplifies the signal from the midpoint filter 42 based on the gain value from the gain reflector 64, and sends the amplified signal to the selector 33. The selector 33 selects either the signal from the midpoint gain 43 or the signal from the Tk gain 32, and sends the selected one to the tracking actuator 15.

Compensation of the gain in the lens shift control in Embodiment 2 will be described. As shown in Figure 7, a light beam uses upper and lower ends of a focal point at the photodetector 16. Thus, the light amount used at the sub-TE generator 21 may vary depending upon the size of the focal point or a shift in positions of dividing lines of the photodetector 16. Since the signal from the sub-TE generator 21 is used at the LE generator 40, detection sensitivities for a signal from the LE generator 40 may vary due to the light amount used at the sub-TE generator 21. For obtaining a ratio between the light amount used at the main TE generator 20 and the light amount used at the sub-TE generator 21, the ratio detector 62 calculates a ratio of the signal from the sub-AS generator 61 to the signal from the main AS generator 60. The gain calculator 63 previously stores a design gain to be obtained when the ratio of the signal from the sub-AS generator 61 to the signal from the main AS generator 60 is one, and calculates a gain value obtained by multiplying the design gain by the ratio from the ratio detector 62. The gain obtained as described above in accordance with the ratio of light amounts is sent by the gain calculator 63 to the LE gain 41. Thus, the variance in gain can be compensated.

Further, an amount of lens shift of a condensing lens 13 with respect to the same driving signal varies depending upon a variance in sensitivities of the tracking actuator 15. The lens shift control uses the same tracking actuator 15 that also performs tracking control. Thus, the variance in gain can be compensated by sending the gain values used for tracking control to the midpoint gain 43 by the gain reflector 64.

As described above, the gain compensation can be performed with the variance in the gain regarding light amount and the gain regarding the actuator in the lens shift control being separately compensated. Further, for measuring the variance in the light amounts, only a ratio of sum signals is measured. Thus, the signal contains only a DC component unlike the signal from the main TE generator 20 which has both the DC component and an AC component. This can reduce a time for measuring. Moreover, the gain for tracking control can also be used for compensating a gain variance regarding the actuator. Thus, no measurement is required for compensation, thereby enabling compensation to be performed in a short period of time.

In Embodiment 2, the signal indicating the amount of lens shift of the condensing lens 13 is generated at the LE generator 40 using only the signal from the sub-TE generator 21. However, both the signal from the main TE generator 20 and the signal from the sub-TE generator 21 may be used. In Embodiment 2, the lens shift control gain is compensated at startup. However, the LE gain 41 may be compensated on a real-time basis in accordance with a change in the signal from the main AS generator 60.

### (Embodiment 3)

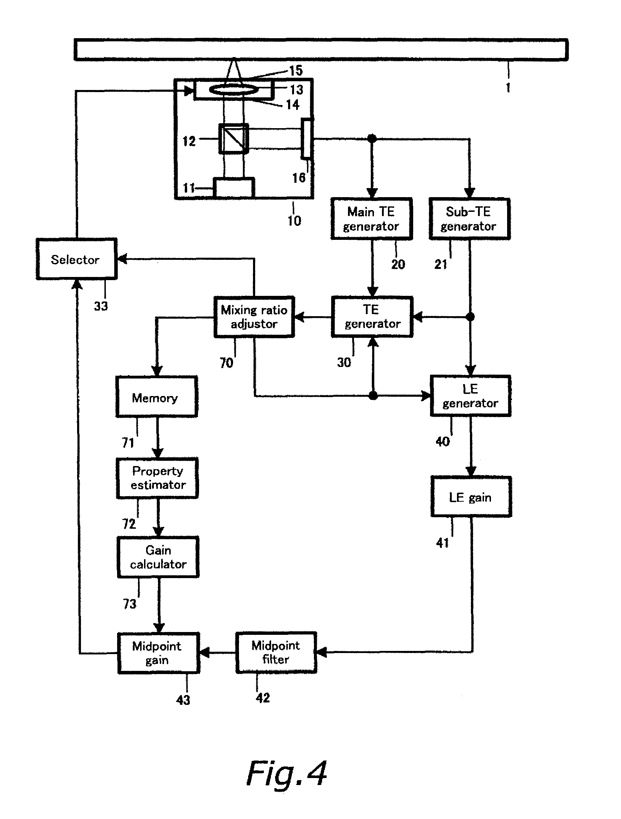

Figure 4 is a block diagram of an optical disc apparatus according to Embodiment 3. The elements in Figure 4 same as those in Figure 6 illustrating the background art are referred to by the same reference numerals and the explanations thereof are omitted. The lens shift error generation unit is an LE generator 40. The track error mixing ratio adjustment unit includes a mixing ratio adjustor 70 and a memory 71. The main track error inspection unit is a property estimator 72. The gain calculation unit is a gain calculator 73.

A TE generator 30 uses a mixing ratio from the mixing ratio adjustor 70 to produce a TE signal, and sends the signal to the mixing ratio adjustor 70. The mixing ratio adjustor 70 sends a driving signal for adjustment to a tracking actuator 15 via a selector 33. Every time the mixing ratio adjustor 70 sends a several number of mixing ratios to the TE generator 30, it obtains a signal from the TE generator 30 and stores the signal in the memory 71. Based on these measured results, the mixing ratio adjustor 70 calculates an optimal mixing ratio and sends it to the TE generator 30 and an LE gain 41. The LE gain 41 amplifies a signal from the LE generator 40 based on the mixing ratio from the mixing ratio adjustor 70, and sends the amplified signal to a midpoint filter 42. The property estimator 72 estimates an amount of an offset in a signal from a main TE generator 20 which is caused by a lens shift of a condensing lens 13, and sends the result to the gain calculator 73. The gain calculator 73 calculates a gain value based on information from the property estimator 72, and sends the gain value to a midpoint gain 43. The midpoint gain 43 amplifies the signal from the midpoint filter 42 based on the gain value from the gain calculator 73, and sends the amplified signal to the selector 33. The selector 33 selects either the signal from the midpoint gain 43 or the signal from the mixing ratio adjustor 70, and sends the selected one to the tracking actuator 15.

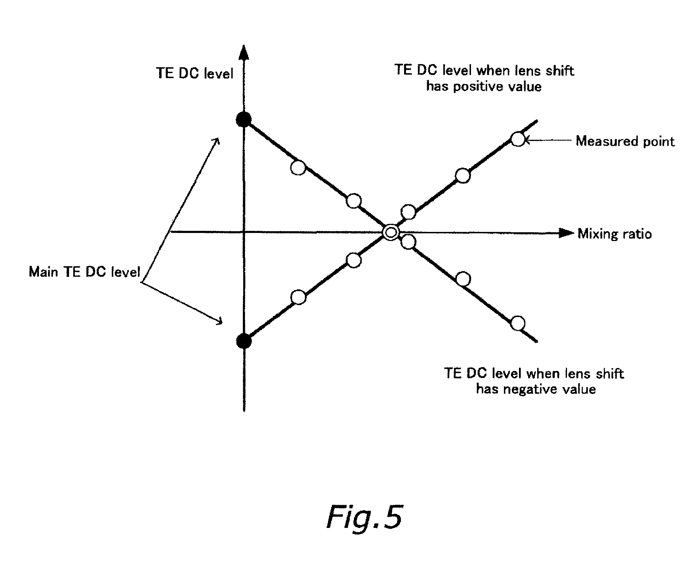

With reference to Figure 5, compensation of gain in lens shift control in Embodiment 3 will be described. Figure 5 shows a DC level of the signal from the TE generator 30 which is measured by the mixing ratio adjustor 70. Blank circles indicate measured points. A double circle indicates an optimal point of the mixing ratio. Filled circles indicate estimated values for the DC level of the signal from the main TE generator 20 when a lens shift of the focal lens occurs, which are estimated by the property estimator 72. The horizontal axis represents the mixing ratio and the vertical axis represents the DC level of the TE signal. As shown in Figure 7, a light beam uses upper and lower ends of a focal point at the photodetector 16. Thus, the light amount used at the sub-TE generator 21 varies depending upon the size of the focal point, or a shift in positions of dividing lines of the photodetector 16. Since the signal from the sub-TE generator 21 is used at the LE generator 40, detection sensitivities may vary due to the light amount used in the sub-TE generator 21. The mixing ratio adjustor 70 sends a signal of a positive value to the tracking actuator 15 via the selector 33, and measures the DC level of the signal from the TE generator 30 for every mixing ratio as shown in Figure 5. The mixing ratio adjustor 70 also sends a signal of a negative value to the tracking actuator 15 via the selector 33, and measures the DC level of the signal from the TE generator 30 for every mixing ratio as shown in Figure 5. Every time a lens shift occurs, an intersection of two lines obtained by first order approximation of the measured values becomes an optimal mixing ratio. The mixing ratio adjustor 70 sends this optimal mixing ratio to the TE generator 30 and the LE gain 41. With this adjustment, the ratio between the light amount used at the main TE generator 20 and the light amount used at the sub-TE generator 21 is obtained. Thus, it becomes possible to compensate a variance in detection sensitivities for the signal from the LE generator 40 due to the light amounts by the LE gain 41.

Besides the light amounts, variance in sensitivities of the tracking actuator 15 and the like may also vary the gain in lens shift control. The property estimator 72 performs first order approximation from the measured points of the mixing ratio adjustor 70 which are stored in the memory 71 to estimate that an amount of an offset in the signal from the main TE generator 20 which is caused by a lens shift of the condensing lens 13 is at the points indicated by the filled circles shown in Figure 5. The difference between the two filled circles is an amount of DC variance in the signal from the main TE generator 20 in accordance with an amount of a lens shift of the condensing lens 13 during the adjustment of the mixing ratio. The property of an offset in the signal from the LE gain 41 which is caused by the lens shift of the condensing lens 13 becomes the same as that of the signal from the main TE generator 20. To have a loop gain of the lens shift control at a predetermined value, the gain calculator 73 previously stores a design gain when the offset in the signal from the main TE generator 20 which is caused by a lens shift of the condensing lens 13 is 1. The gain calculator 73 calculates the gain by multiplying the design gain by the offset estimated by the property estimator 72, and sends the result to the midpoint gain 43.

As described above, gain compensation can be achieved with the property ratios between the signal from the main TE generator 20 and the signal from the sub-TE generator 21 being separated from the property of the signal from the main TE generator 20 for compensation. Further, the mixing ratio adjustor 70 is essential for adjustment of the TE generator 30, and the compensation can be performed in a short period of time without adding further measurement for the lens shift control.

In Embodiment 3, the signal indicating an amount of the lens shift of the condensing lens 13 is generated in the LE generator 40 using only the signal from the sub TE generator 21. However, the signals from both the main TE generator 20 and the sub TE generator 21 may be used. In Embodiment 3, the property estimator 72 obtains a straight line by first order approximation from the measured points in the memory 71. However, a straight line connecting two points of small mixing ratios may be obtained.

### (Others)

In the optical disc apparatuses described in the above embodiments with reference to the drawings, each of the blocks may be formed into one chip by a semiconductor device such as LSI. Alternatively, some or all of the blocks may be formed into one chip.

Specifically, in Figures 1, 3, and 4, each of the blocks other than the optical disc 1 and the optical head 10 may be formed into one chip, or some or all of the blocks may be formed into one chip including some or all of the blocks.

Herein, an LSI is used as an example. However, the device may be called IC, system LSI, super LSI, or ultra LSI, depending upon its integration density.

Moreover, a method for integration is not limited to LSI. Integrated circuit may be realized as specific-purpose circuits or commonly-used processors. After fabrication of LSI, a field programmable gate array (FPGA) which can be programmed, or a reconfigurable processor which allows reconfiguration of connection and setting of circuit cells within the LSI may be used.

In advent of new technique for integrating circuits which may replace LSI caused by an advance in semiconductor technology or another technology developed therefrom, functional blocks may be integrated using such a technique. Application of biotechnology is also possible.

### INDUSTRIAL APPLICABILITY

The present invention is applicable to an optical disc apparatus which performs stable search to a target track when information is recorded or reproduced on or from an information carrier having a disc shape which can perform recording (hereinafter, referred to as an optical disc).

## Claims

1. An optical disc apparatus comprising:
convergence irradiation unit for converging and irradiating a light beam on an information carrier having tracks for recording and reproducing information;
track movement unit for moving the light beam converged by the convergence irradiation unit in a direction transverse to the tracks;
main track error detection unit for detecting a signal in accordance with positions of the light beam and the track;
sub-track error detection unit for detecting a signal having a ratio between a DC component due to a shift of the track movement unit and an AC component in accordance with the position of the track, the ratio being different from that of the signal from the main track error detection unit;
lens shift error generation unit for generating a signal in accordance with an amount of shift of the track movement unit from the signal from the main track error detection unit and the signal from the sub-track error detection unit;
lens shift control unit for controlling the amount of shift of the track movement unit at a predetermined value based on the signal from the lens shift error generation unit;
offset compensation unit for compensating an offset of the signal from the lens shift error generation unit;
apparatus state output unit for outputting a signal indicating an apparatus state as a search operation, a recording operation, a reproduction operation, or waiting; and
offset instruction unit for giving instructions to the offset compensation unit so as to perform circuit offset compensation at timing when the signal from the apparatus state output unit is switched to the search operation from any of the other states.

2. An optical disc apparatus comprising:
convergence irradiation unit for converging and irradiating a light beam on an information carrier having tracks for recording and reproducing information;
track movement unit for moving the light beam converged by the convergence irradiation unit in a direction transverse to the tracks;
main track error detection unit for detecting a signal in accordance with positions of the light beam and the track;
sub-track error detection unit for detecting a signal having a ratio between a DC component due to a shift of the track movement unit and an AC component in accordance with the position of the track, the ratio being different from that of the signal from the main track error detection unit;
lens shift error generation unit for generating a signal in accordance with an amount of shift of the track movement unit from the signal from the main track error detection unit and the signal from the sub-track error detection unit;
lens shift control unit for controlling the amount of shift of the track movement unit at a predetermined value based on the signal from the lens shift error generation unit;
offset compensation unit for compensating an offset of the signal from the lens shift error generation unit;
apparatus state output unit for outputting a signal indicating an apparatus state as a search operation, a recording operation, a reproduction operation, or waiting; and
offset instruction unit for giving instructions to the offset compensation unit so as to perform circuit offset compensation at timing when the signal from the apparatus state output unit is switched from the search operation to any of the other states.

3. An optical disc apparatus comprising:
convergence irradiation unit for converging and irradiating a light beam on an information carrier having tracks for recording and reproducing information;
track movement unit for moving the light beam converged by the convergence irradiation unit in a direction transverse to the tracks;
main track error detection unit for detecting a signal in accordance with positions of the light beam and the track;
sub-track error detection unit for detecting a signal having a ratio between a DC component due to a shift of the track movement unit and an AC component in accordance with the position of the track, the ratio being different from that of the signal from the main track error detection unit;
lens shift error generation unit for generating a signal in accordance with an amount of shift of the track movement unit from the signal from the main track error detection unit and the signal from the sub-track error detection unit;
lens shift control unit for controlling the amount of shift of the track movement unit at a predetermined value based on the signal from the lens shift error generation unit;
offset compensation unit for compensating an offset of the signal from the lens shift error generation unit;
apparatus state output unit for outputting a signal indicating an apparatus state as a search operation, a recording operation, a reproduction operation, or waiting; and
offset instruction unit for giving instructions to the offset compensation unit so as to perform circuit offset compensation at timing when the signal from the apparatus state output unit is switched from the recording or reproduction operation to any of the other states.

4. The optical disc apparatus according to any of claims 1 through 3, wherein the offset compensation unit includes stray light compensation unit for compensating an offset by detecting a difference between a stray light offset value and a circuit offset value at startup.

5. The optical disc apparatus according to any of claims 1 through 3, wherein the offset instruction unit gives instructions so as to perform the circuit offset compensation only when the number of tracks to be searched is a predetermined number or higher.

6. The optical disc apparatus according to any of claims 1 through 3, wherein the offset instruction unit gives instructions so as to perform the circuit offset compensation only when the number of tracks to be searched is a predetermined number or lower.

7. The optical disc apparatus according to any of claims 1 through 3, further comprising:
focus movement unit for moving a focal point of the light beam converged by the convergence irradiation unit in a direction normal to an information surface of the information carrier;
focus error detection unit for generating a signal in accordance with a shift in a position of the focal point of the light beam with respect to the information surface of the information carrier;
focus control unit for driving the focus movement unit such that the focal point of the light beam follows the information surface of the information carrier in response to a signal of focus shift signal detection unit; and
focus hold unit for holding the focus control unit when a circuit offset is adjusted.

8. The optical disc apparatus according to any of claims 1 through 3, further comprising:
track error detection unit for detecting a signal in accordance with the positions of the light beam and the track based on the signal from the main track error detection unit and the signal from the sub-track error detection unit;
tracking control unit for driving and controlling the track movement unit based on an output from the track error detection unit so as to correctly scan tracks of the information carrier; and
track hold unit for holding the tracking control unit when a circuit offset is adjusted.

9. An optical disc apparatus comprising:
convergence irradiation unit for converging and irradiating a light beam on an information carrier having tracks for recording and reproducing information;
track movement unit for moving the light beam converged by the convergence irradiation unit in a direction transverse to the tracks;
main track error detection unit for detecting a signal in accordance with positions of the light beam and the track;
sub-track error detection unit for detecting a signal having a ratio between a DC component due to a shift of the track movement unit and an AC component in accordance with the position of the track, the ratio being different from that of the signal from the main track error detection unit;
main light amount detection unit for detecting an aggregate sum of signals used by the main track error detection unit;
sub-light amount detection unit for detecting an aggregate sum of signals used by the sub-track error detection unit;
lens shift error generation unit for generating a signal in accordance with an amount of shift of the track movement unit from the signal from the main track error detection unit and the signal from the sub-track error detection unit;
lens shift control unit for controlling the amount of shift of the track movement unit at a predetermined value based on the signal from the lens shift error generation unit;
light amount ratio detection unit for detecting a ratio in levels of a signal from the main light amount detection unit and a signal from the sub-light amount detection unit; and
gain calculation unit for calculating a gain in lens shift control based on a signal from the light amount ratio detection unit.

10. The optical disc apparatus according to claim 9, further comprising:
track error detection unit for detecting a signal in accordance with positions of the light beam and the track based on the signal from the main track error detection unit and the signal from the sub-track error detection unit;
tracking control unit for driving and controlling the track movement unit based on an output from the track error detection unit so as to correctly scan tracks of the information carrier;
tracking control gain adjustment unit for adjusting a gain of the tracking control unit such that a band of the tracking control unit is at a predetermined value; and
gain reflection unit for reflecting the gain obtained by the tracking control gain adjustment unit on the gain in the lens shift control.

11. An optical disc apparatus comprising:
convergence irradiation unit for converging and irradiating a light beam on an information carrier having tracks for recording and reproducing information;
track movement unit for moving the light beam converged by the convergence irradiation unit in a direction transverse to the tracks;
main track error detection unit for detecting a signal in accordance with positions of the light beam and the track;
sub-track error detection unit for detecting a signal having a ratio between a DC component due to a shift of the track movement unit and an AC component in accordance with the position of the track, the ratio being different from that of the signal from the main track error detection unit;
lens shift error generation unit for generating a signal in accordance with an amount of shift of the track movement unit from the signal from the main track error detection unit and the signal from the sub-track error detection unit;
lens shift control unit for controlling the amount of shift of the track movement unit at a predetermined value based on the signal from the lens shift error generation unit;
main track error inspection unit for detecting a DC component of the signal from the main track error detection unit which varies in accordance with an amount of shift of the track movement unit; and
gain calculation unit for calculating a gain in lens shift control based on the signal from the main track error inspection unit.

12. The optical disc apparatus according to claim 11, further comprising:
track error detection unit for detecting a signal in accordance with the positions of the light beam and the track based on the signal from the main track error detection unit and the signal from the sub-track error detection unit; and
track error mixing ratio adjustment unit for adjusting a mixing ratio between the signal from the main track error detection unit and the signal from the sub-track error detection unit such that an output signal does not change in accordance with the amount of shift of the track movement unit by shifting the track movement unit and measuring a DC level of the signals from the track error detection unit to be stored in a memory,
wherein the main track error inspection unit detects a DC component of the signal from the main track error detection unit which varies in accordance with the amount of shift of the track movement unit in accordance with a content stored in the memory of the track error mixing ratio adjustment unit.

13. The optical disc apparatus according to claim 12, wherein the main track error inspection unit detects a DC component of the signal from the main track error detection unit which varies in accordance with the amount of shift of the track movement unit by obtaining a first order straight line approximation equation from measured points.

14. The optical disc apparatus according to claim 12, wherein the main track error inspection unit detects a DC component of the signal from the main track error detection unit which varies in accordance with the amount of shift of the track movement unit by obtaining a straight line from measurement results at two points where the mixing ratios are small.

15. The optical disc apparatus according to claim 9 or 11, further comprising gain light amount compensation unit for compensating a gain in lens shift control in accordance with a change in the signal from the main track error detection unit.

16. An optical disc semiconductor comprising:
main track error detection unit for detecting a signal in accordance with positions of a light beam and a track;
sub-track error detection unit for detecting a signal having a ratio between a DC component due to a shift of the light beam within an optical head and an AC component in accordance with the position of the track, the ratio being different from that of the signal from the main track error detection unit;
lens shift error generation unit for generating a signal in accordance with an amount of shift of the light beam within the optical head from the signal from the main track error detection unit and the signal from the sub-track error detection unit;
lens shift control unit for controlling the amount of shift of the light beam within the optical head at a predetermined value based on the signal from the lens shift error generation unit;
offset compensation unit for compensating an offset of the signal from the lens shift error generation unit; and
offset instruction unit for giving instructions to the offset compensation unit so as to perform circuit offset compensation at timing when a signal indicating an apparatus state as a search operation, a recording operation, a reproduction operation, or waiting is switched to the search operation from any of the other states.

17. An optical disc semiconductor comprising:
main track error detection unit for detecting a signal in accordance with positions of a light beam and a track;
sub-track error detection unit for detecting a signal having a ratio between a DC component due to a shift of the light beam within an optical head and an AC component in accordance with the position of the track, the ratio being different from that of the signal from the main track error detection unit;
lens shift error generation unit for generating a signal in accordance with an amount of shift of the light beam within the optical head from the signal from the main track error detection unit and the signal from the sub-track error detection unit;
lens shift control unit for controlling the amount of shift of the light beam within the optical head at a predetermined value based on the signal from the lens shift error generation unit;
offset compensation unit for compensating an offset of the signal from the lens shift error generation unit; and
offset instruction unit for giving instructions to the offset compensation unit so as to perform circuit offset compensation at timing when a signal indicating an apparatus state as a search operation, a recording operation, a reproduction operation, or waiting is switched from the search operation to any of the other states.

18. An optical disc semiconductor comprising:
main track error detection unit for detecting a signal in accordance with positions of a light beam and a track;
sub-track error detection unit for detecting a signal having a ratio between a DC component due to a shift of the light beam within an optical head and an AC component in accordance with the position of the track, the ratio being different from that of the signal from the main track error detection unit;
lens shift error generation unit for generating a signal in accordance with an amount of shift of the light beam within the optical head from the signal from the main track error detection unit and the signal from the sub-track error detection unit;
lens shift control unit for controlling the amount of shift of the light beam within the optical head at a predetermined value based on the signal from the lens shift error generation unit;
offset compensation unit for compensating an offset of the signal from the lens shift error generation unit; and
offset instruction unit for giving instructions to the offset compensation unit so as to perform circuit offset compensation at timing when a signal indicating an apparatus state as a search operation, a recording operation, a reproduction operation, or waiting is switched from the recording or reproduction operation to any of the other states.

19. The optical disc semiconductor according to any of claims 16 through 18, wherein the offset compensation unit includes stray light compensation unit for compensating an offset by detecting a difference between a stray light offset value and a circuit offset value at startup.

20. The optical disc semiconductor according to any of claims 16 through 18, wherein the offset instruction unit gives instructions so as to perform the circuit offset compensation only when the number of tracks to be searched is a predetermined number or higher.

21. The optical disc semiconductor according to any of claims 16 through 18, wherein the offset instruction unit gives instructions so as to perform the circuit offset compensation only when the number of tracks to be searched is a predetermined number or lower.

22. The optical disc semiconductor according to any of claims 16 through 18, further comprising:
focus error detection unit for generating a signal in accordance with a shift in a position of a focal point of the light beam with respect to an information surface of an information carrier;
focus control unit for driving to change a convergence state of the light beam such that the focal point of the light beam follows the information surface of the information carrier in response to a signal of focus shift signal detection unit; and
focus hold unit for holding the focus control unit when a circuit offset is adjusted.

23. The optical disc semiconductor according to any of claims 16 through 18, further comprising:
track error detection unit for detecting a signal in accordance with the positions of the light beam and the track based on the signal from the main track error detection unit and the signal from the sub-track error detection unit;
tracking control unit for driving and controlling a focal point of the light beam in parallel to a surface of an information carrier based on an output from the track error detection unit so as to correctly scan the tracks of the information carrier; and
track hold unit for holding the tracking control unit when a circuit offset is adjusted.

24. An optical disc semiconductor comprising:
main track error detection unit for detecting a signal in accordance with positions of a light beam and a track;
sub-track error detection unit for detecting a signal having a ratio between a DC component due to a shift of the light beam within an optical head and an AC component in accordance with the position of the track, the ratio being different from that of the signal from the main track error detection unit;
main light amount detection unit for detecting an aggregate sum of signals used by the main track error detection unit;
sub-light amount detection unit for detecting an aggregate sum of signals used by the sub-track error detection unit;
lens shift error generation unit for generating a signal in accordance with an amount of shift of the light beam within the optical head from the signal from the main track error detection unit and the signal from the sub-track error detection unit;
lens shift control unit for controlling the amount of shift of the light beam within the optical head at a predetermined value based on the signal from the lens shift error generation unit;
light amount ratio detection unit for detecting a ratio in levels of a signal from a main light amount detection unit and a signal from the sub-light amount detection unit; and
gain calculation unit for calculating a gain in lens shift control based on a signal from the light amount ratio detection unit.

25. The optical disc semiconductor according to claim 24, further comprising:
track error detection unit for detecting a signal in accordance with the positions of the light beam and the track based on the signal from the main track error detection unit and the signal from the sub-track error detection unit;
tracking control unit for driving and controlling a focal point of the light beam in parallel with a surface of an information carrier based on an output from the track error detection unit so as to correctly scan the tracks of the information carrier;
tracking control gain adjustment unit for adjusting a gain of the tracking control unit such that a band of the tracking control unit is at a predetermined value; and
gain reflection unit for reflecting the gain obtained by the tracking control gain adjustment unit on the gain in the lens shift control.

26. An optical disc semiconductor comprising:
main track error detection unit for detecting a signal in accordance with positions of a light beam and a track;
sub-track error detection unit for detecting a signal having a ratio between a DC component due to a shift of the light beam within an optical head and an AC component in accordance with the position of the track, the ratio being different from that of the signal from the main track error detection unit;
lens shift error generation unit for generating a signal in accordance with an amount of shift of the light beam within the optical head from the signal from the main track error detection unit and the signal from the sub-track error detection unit;
lens shift control unit for controlling the amount of shift of the light beam within the optical head at a predetermined value based on the signal from the lens shift error generation unit;
main track error inspection unit for detecting a DC component of the signal from the main track error detection unit which varies in accordance with the amount of shift; and
gain calculation unit for calculating a gain in lens shift control based on the signal from the main track error detection unit.

27. The optical disc semiconductor according to claim 26, further comprising:
track error detection unit for detecting a signal in accordance with positions of the light beam and the track based on the signal from the main track error detection unit and the signal from the sub-track error detection unit; and
track error mixing ratio adjustment unit for adjusting a mixing ratio between the signal from the main track error detection unit and the signal from the sub-track error detection unit such that an output signal does not change in accordance with the amount of shift of the light beam by shifting the light beam in parallel to a surface of an information carrier and measuring a DC level of the signals from the track error detection unit to be stored in a memory,
wherein the main track error inspection unit detects a DC component of the signal from the main track error detection unit which varies in accordance with the amount of shift in accordance with a content stored in the memory of the track error mixing ratio adjustment unit.

28. The optical disc semiconductor according to claim 27, wherein the main track error inspection unit detects a DC component of the signal from the main track error detection unit which varies in accordance with the amount of shift by obtaining a first order straight line approximation equation from the measured points.

29. The optical disc apparatus according to claim 27, wherein the main track error inspection unit detects a DC component of the signal from the main track error detection unit which varies in accordance with the amount of shift by obtaining a straight line from measurement results at two points where the mixing ratios are small.

30. The optical disc semiconductor according to claim 24 or 26, further comprising gain light amount compensation unit for compensating a gain in lens shift control in accordance with a change in the signal from the main track error detection unit.
